# EUROPEAN PATENT SPECIFICATION

(11) **EP 4 610 928 B1**
(45) Date of publication and mention of the grant of the patent: **26.08.2026**
(21) Application number: 24206335.2
(22) Date of filing: 14.10.2024
(51) Int. Cl.: G06T 7/73

(54) **APPARATUS AND METHOD FOR PREDICTING THREE-DIMENSIONAL POSE**
VORRICHTUNG UND VERFAHREN ZUR VORHERSAGE EINER DREIDIMENSIONALEN POSE
APPAREIL ET PROCÉDÉ DE PRÉDICTION DE POSE TRIDIMENSIONNELLE

(30) Priority: 28.02.2024 KR 20240028611; 05.07.2024 KR 20240088796
(43) Date of publication of application: 03.09.2025
(73) Proprietor: Seoul National University R & DB Foundation, Seoul 08826 (KR)
(72) Inventor: LEE, Youngki, 08826 Seoul (KR); KANG, Taeho, 07040 Seoul (KR)
(74) Representative: Isarpatent

(56) References cited:
- KANG TAEHO ET AL: "Attention-Propagation Network for Egocentric Heatmap to 3D Pose Lifting", 2024 IEEE/CVF CONFERENCE ON COMPUTER VISION AND PATTERN RECOGNITION (CVPR), IEEE, 16 June 2024 (2024-06-16), pages 842 - 851, XP034695757, DOI: 10.1109/CVPR52733.2024.00086
- KANG TAEHO ET AL: "Ego3DPose: Capturing 3D Cues from Binocular Egocentric Views", INTERNATIONAL CCONFERENCE ON MULTIMODAL INTERACTION, ACMPUB27, NEW YORK, NY, USA, 10 December 2023 (2023-12-10), pages 1 - 10, XP059445934, ISBN: 979-8-4007-0321-8, DOI: 10.1145/3610548.3618147
- ZHAO DONGXU ET AL: "EgoGlass: Egocentric-View Human Pose Estimation From an Eyeglass Frame", 2021 INTERNATIONAL CONFERENCE ON 3D VISION (3DV), IEEE, 1 December 2021 (2021-12-01), pages 32 - 41, XP033999081, DOI: 10.1109/3DV53792.2021.00014
- PARK JINMAN ET AL: "Domain-Guided Spatio-Temporal Self-Attention for Egocentric 3D Pose Estimation", PROCEEDINGS OF THE 2023 ACM ASIA CONFERENCE ON COMPUTER AND COMMUNICATIONS SECURITY, ACMPUB27, NEW YORK, NY, USA, 6 August 2023 (2023-08-06), pages 1837 - 1849, XP059351004, ISBN: 979-8-4007-0103-0, DOI: 10.1145/3580305.3599312

## Description

### BACKGROUND

### 1. Technical Field

The embodiments disclosed herein relate generally to an apparatus and method for predicting a three-dimensional (3D) pose, and more particularly to an apparatus and method for predicting a 3D pose that may minimize information loss during an encoding process and predict a 3D pose more accurately when predicting a user's pose based on the pose information obtained by directly observing the user from a first-person viewpoint.

### 2. Description of the Related Art

As deep neural network technology develops, the market for virtual reality and augmented reality devices and software is rapidly developing.

In connection with this, a head-mounted display (HMD) is a device that allows a user to wear it on his or her head and experience virtual reality and augmented reality, and a technology that precisely reproduces a user's movements by using a camera mounted inside an HMD is being applied to virtual reality and augmented reality.

Meanwhile, in order to estimate a user's pose by using the information observed from a first-person viewpoint, the user may directly observe his or her own body from a first-person viewpoint by using the internal camera of an HMD, and the observed information may be utilized to predict a 3D pose. In this case, according to a conventional technology, heatmaps, which are probabilistic representations of a two-dimensional (2D) pose, are obtained from image data containing observed body information, the heatmaps are compressed at once by using a convolutional neural network (CNN)-based encoder structure, and a 3D pose is predicted from the compressed information by using a decoder network that infers poses.

However, according to the above-described conventional technology, the probabilistic information of the heatmaps is lost in the process in which the encoder compresses the information, and decoding is performed at once without taking into consideration the fact that, when the user observes body parts from a first-person viewpoint, parts far from the camera are hidden by other body parts and are thus inaccurate. As a result, a problem arises in that the above-described conventional technology has lower pose prediction accuracy than a pose prediction technology using a third-person camera.

Therefore, there is a demand for technology that can provide higher pose prediction accuracy when predicting a 3D pose based on the body information obtained by observing body parts from a first-person viewpoint.

Meanwhile, the above-described background technology corresponds to technical information that has been possessed by the present inventor in order to contrive the present invention or that has been acquired in the process of contriving the present invention, and can not necessarily be regarded as well-known technology that had been known to the public prior to the filing of the present invention.

### [Related Art Literature]

Patent Document: Korean Patent Application No. 10-2023-0066309 (published on December 5, 2023)

### SUMMARY

An object of the embodiments disclosed herein is to provide an apparatus and method for predicting a 3D pose that may minimize information loss during an encoding process and predict a 3D pose more accurately when predicting a user's pose based on the pose information obtained by directly observing the user from a first-person viewpoint.

Other objects and advantages of the present invention can be understood from the following description and will be more clearly understood from the embodiments. Furthermore, it will be readily understood that the objects and advantages of the present invention can be realized by the means set forth in the attached claims

The present invention is set out by the appended claims.

According to an aspect of the present invention, there is provided an apparatus for predicting a three-dimensional (3D) pose, as defined by independent claim 1. The apparatus includes: an input/output interface configured to receive a plurality of pieces of image data obtained by observing a user's body parts from a first-person viewpoint and output the results of computation processing of the image data; memory configured to store a program for performing a method of predicting a 3D pose; and a controller configured to predict the user's 3D pose based on the image data received through the input/output interface by executing the program; wherein the control unit: generates the plurality of pieces of image data as limb heatmaps and joint heatmaps by using a heatmap estimator; extracts a joint feature vector by inputting the joint heatmaps to a grid heatmap encoder; outputs a propagation feature vector by propagating a relational feature vector between neighboring joints, generated based on the joint feature vector and the limb heatmaps, through a propagation network having a skeletal tree hierarchical structure; and predicts the user's 3D pose based on the propagation feature vector and the joint feature vector. The controller extracts the joint feature vector by concatenating the joint heatmaps in a grid form and thus combining them into a single image, dividing the combined image into patches, which are joint heatmaps for each joint, and encoding the patches.

According to another aspect of the present invention, there is provided a method of predicting a three-dimensional (3D) pose, as defined by independent claim 4. The method being performed by an apparatus for predicting a 3D pose, the method includes: receiving a plurality of pieces of image data obtained by observing a user's body parts from a first-person viewpoint; generating the plurality of pieces of image data as limb heatmaps and joint heatmaps by using a heatmap estimator; extracting a joint feature vector by inputting the joint heatmaps to a grid heatmap encoder; outputting a propagation feature vector by propagating a relational feature vector between neighboring joints, generated based on the joint feature vector and the limb heatmaps, through a propagation network having a skeletal tree hierarchical structure; and predicting the user's 3D pose based on the propagation feature vector and the joint feature vector. The controller extracts the joint feature vector by concatenating the joint heatmaps in a grid form and thus combining them into a single image, dividing the combined image into patches, which are joint heatmaps for each joint, and encoding the patches.

According to still another aspect of the present invention, there is provided a non-transitory computer-readable storage medium having stored thereon a program that, when executed by one or more of processors, causes the one or more of processor to execute the method of predicting a three-dimensional (3D) pose.

According to still another aspect of the present invention, there is provided a computer program that is executed by an apparatus for predicting a three-dimensional (3D) pose and stored in a non-transitory computer-readable storage medium to perform the method of predicting a 3D pose.

According to one of the above-described solutions, a plurality of heat maps obtained from image data including body information are concatenated and processed into a single image in a grid form at a pixel level, so that efficient encoding is enabled by allowing a wide pixel area to simultaneously exchange information during encoding, thereby minimizing information loss that may occur during an encoding process and thus enabling a 3D pose to be predicted more accurately.

Furthermore, information about body parts close to a camera (information about upper joints) included in the image data obtained from a first-person viewpoint may be accurate, whereas information about body parts far from the camera (information about lower joints) may not be accurate due to the hiding between body parts. Information about upper joints (e.g., the joint feature vectors of upper joints and a relational feature vector between neighboring joints) is propagated to lower joints through a propagation network having a skeletal tree hierarchical structure, so that information about hidden lower joints (e.g., the joint feature vectors of the lower joints) is predicted, so that there is an effect of being able to predict a more accurate 3D pose.

The effects that can be obtained by the embodiments disclosed herein are not limited to the above-described effects, and other effects that have not been described above will be clearly understood by those having ordinary skill in the art, to which the disclosed embodiments pertain, from the following description.

### BRIEF DESCRIPTION OF THE DRAWINGS

The above and other objects, features, and advantages of the present invention will be more clearly understood from the following detailed description taken in conjunction with the accompanying drawings, in which:
FIG. 1 is a functional block diagram of an apparatus for predicting a 3D pose according to an embodiment;
FIGS. 2 and 3 are exemplary diagrams illustrating an apparatus for predicting a 3D pose according to an embodiment; and
FIG. 4 is a flowchart of a method of predicting a 3D pose in an apparatus for predicting a 3D pose according to an embodiment.

### DETAILED DESCRIPTION

Various embodiments will be described in detail below with reference to the accompanying drawings. The following embodiments may be modified to various different forms and then practiced. In order to more clearly illustrate features of the embodiments, detailed descriptions of items that are well known to those having ordinary skill in the art to which the following embodiments pertain will be omitted. Furthermore, in the drawings, portions unrelated to descriptions of the embodiments will be omitted. Throughout the specification, like reference symbols will be assigned to like portions.

Throughout the specification, when one component is described as being "connected" to another component, this includes not only a case where the one component is 'directly connected' to the other component but also a case where the one component is 'connected to the other component with a third component arranged therebetween.' Furthermore, when one portion is described as "including" one component, this does not mean that the portion does not exclude another component but means that the portion may further include another component, unless explicitly described to the contrary.

Embodiments will be described in detail below with reference to the accompanying drawings.

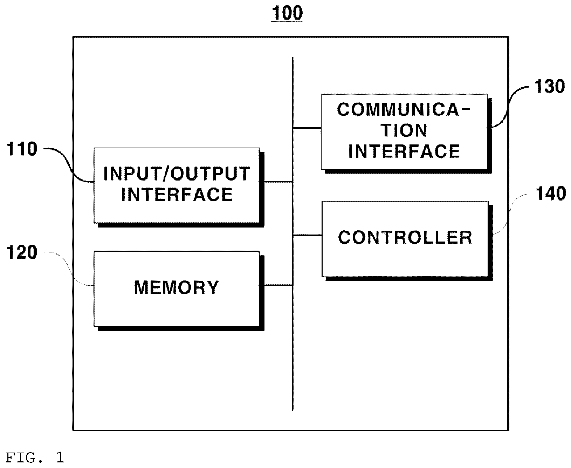

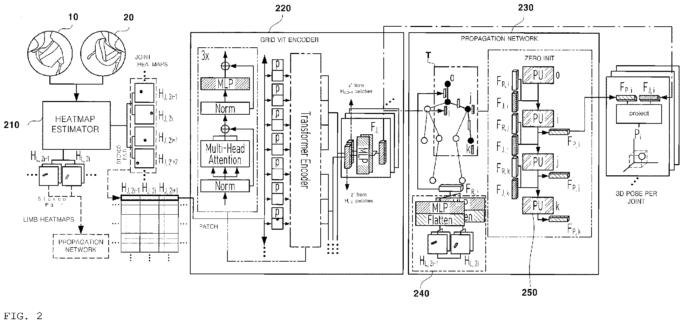

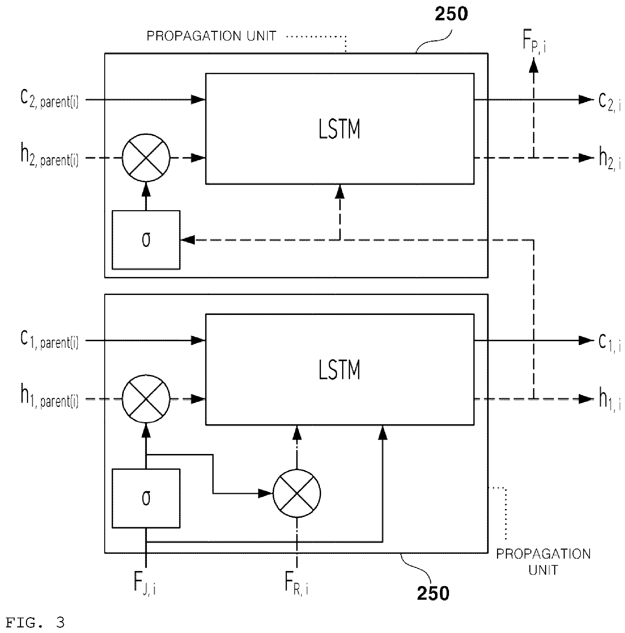

FIG. 1 is a functional block diagram of an apparatus for predicting a 3D pose according to an embodiment, and FIGS. 2 and 3 are exemplary diagrams illustrating an apparatus for predicting a 3D pose according to an embodiment.

The apparatus for predicting a 3D pose may be implemented as an electronic apparatus 100. The electronic apparatus 100 may include a user terminal, or may include a user terminal and a server. For example, the electronic apparatus 100 may implement a method according to an embodiment disclosed herein with a user terminal or a server-client system.

In this case, according to an embodiment, the user terminal may be implemented as a computer, a mobile terminal, a television, a wearable device, or the like that can access a remote server over a network or connect with another terminal and a server. In this case, the computer includes, e.g., a notebook, a desktop, a laptop, and the like each equipped with a web browser. The mobile terminal is, e.g., a wireless communication device capable of guaranteeing portability and mobility, and may include all types of handheld wireless communication devices, such as a Personal Communication System (PCS) terminal, a Personal Digital Cellular (PDC) terminal, a Personal Handyphone System (PHS) terminal, a Personal Digital Assistant (PDA), a Global System for Mobile communications (GSM) terminal, an International Mobile Telecommunication (IMT)-2000 terminal, a Code Division Multiple Access (CDMA)-2000 terminal, a W-Code Division Multiple Access (W-CDMA) terminal, a Wireless Broadband (Wibro) Internet terminal, a smartphone, a Mobile Worldwide Interoperability for Microwave Access (mobile WiMAX) terminal, and the like. Furthermore, the television may include an Internet Protocol Television (IPTV), an Internet Television (Internet TV), a terrestrial TV, a cable TV, and the like. Moreover, the wearable device is an information processing device of a type that can be directly worn on a human body, such as a watch, glasses, an accessory, clothing, shoes, or the like, and can access a remote server or be connected to another terminal directly or via another information processing device over a network.

According to an embodiment, the electronic apparatus 100 is implemented as a server-client system, and the user terminal included in the electronic apparatus 100 is a wearable device and may be implemented as an HMD that displays a virtual environment image to a user and changes a corresponding image in response to the user's movement. The user terminal is equipped with a built-in/attached camera and may obtain a camera view image showing the real world, and may communicate with a server.

The electronic apparatus 100 may observe various body parts of the user through an input/output interface such as cameras installed therein, and may generate the results of the observation as a plurality of pieces of image data. In this case, the generated plurality of pieces of image data may be image data including information about the user's body parts observed in various directions from a first-person viewpoint.

The electronic apparatus 100 may receive a plurality of pieces of image data obtained by observing the user's body parts from a first-person viewpoint, and may generate the plurality of pieces of image data as limb heatmaps and joint heatmaps by using a heatmap estimator. In this case, the heatmaps represent per-pixel probabilistic 2D poses from a camera viewpoint, and according to an embodiment, two types of heatmaps for joints and limbs may be used. The limb heatmaps may represent a limb pose as a stereo pair, and the joint heatmaps may represent a joint pose as a stereo pair. In this case, the joint heatmaps follow the standard definition (see the paper by Jonathan Tompson, Ross Goroshin, Arjun Jain, Yann Le-Cun, and Christoph Bregler (2015). Efficient object localization using convolutional networks. In CVPR, pages 648-656. IEEE Computer Society) in which a pixel value represents the probability that a joint is at corresponding 2D coordinates. The limb heatmaps have two channels, and may be used to obtain a relational feature vector between two joints. The limb heatmaps may represent 3D information together with limb visibility with lines connecting the joints (see the paper by Taeho Kang, Kyungjin Lee, Jinrui Zhang, and Youngki Lee (2023). Ego3dpose: Capturing 3d cues from binocular egocentric views. In SIGGRAPH Asia 2023 Conference Papers, New York, NY, USA. Association for Computing Machinery).

The electronic apparatus 100 may extract joint feature vectors by inputting joint heatmaps to a grid heatmap encoder (a grid vision transformer (ViT) encoder). According to an embodiment, the grid heatmap encoder may receive joint heatmaps as input and generate a feature embedding for each joint. That is, the grid heatmap encoder may receive joint heatmaps as input and extract a joint feature vector for each joint.

The electronic apparatus 100 may output a propagation feature vector by propagating the relational feature vector between neighboring joints, generated based on the extracted joint feature vector and the limb heat maps, through a propagation network. In this case, the propagation network may have a skeletal tree hierarchical structure. According to an embodiment, the skeletal tree hierarchical structure may be constructed in the form of a tree in which individual joints are connected with the head set as the root thereof.

The electronic apparatus 100 may predict a 3D pose of the user based on propagation feature vectors and joint feature vectors.

Hereinafter, the apparatus for predicting a 3D pose refers to the electronic apparatus 100 described above.

Referring to FIG. 1, an apparatus 100 for predicting a 3D pose according to an embodiment includes an input/output interface 110, memory 120, a communication interface 130, and a controller 140.

The input/output interface 110 may include an input interface for receiving input from a user and an output interface for displaying information such as the results of performance of a task, the status of the apparatus 100 for predicting a 3D pose, or the like. For example, the input/output interface 110 may include an operation panel for receiving user input and a display panel for displaying screens.

More specifically, the input interface may include devices capable of receiving various types of user input such as a keyboard, physical buttons, a touch screen, a camera, a microphone, a sensor, and the like. Furthermore, the output interface may include a display panel, a speaker, and the like. However, the input/output interface 110 is not limited thereto, and may include components capable of supporting various types of input/output.

According to an embodiment, the apparatus 100 for predicting a 3D pose is implemented as an HMD. When the apparatus 100 for predicting a 3D pose is mounted on the user's head, the input/output interface 110 may receive a plurality of pieces of image data obtained by observing the user's various body parts from a first-person viewpoint. For example, when the input interface is a camera, image data may be obtained by photographing the user's various body parts with the camera.

Meanwhile, various types of data such as files, applications, and programs may be installed and stored in the memory 120. The controller 140 may access and use the data stored in the memory 120, or may store new data in the memory 120. Furthermore, the controller 140 may execute a program installed in the memory 120. Referring to FIG. 1, a program for performing a method of predicting a 3D pose may be installed in the memory 120.

According to an embodiment, when an input requesting the start of a program is received from a user through the input/output interface 110, the controller 140 may perform a method of predicting a 3D pose by executing the program stored in the memory 120.

Meanwhile, the communication interface 130 may perform wired/wireless communication with another device or a network. To this end, the communication interface 130 may include a communication module supporting at least one of various wired/wireless communication methods. For example, the communication module may be implemented in the form of a chipset.

The wireless communication supported by the communication interface 130 may be, e.g., Wireless Fidelity (Wi-Fi), Wi-Fi Direct, Bluetooth, Ultra-Wide Band (UWB), Near Field Communication (NFC), or the like. Furthermore, the wired communication supported by the communication interface 130 may be, e.g., Universal Serial Bus (USB), High Definition Multimedia Interface (HDMI), or the like.

The controller 140 is a component including at least one processor such as a CPU, a GPU, an Arduino, or the like, and may control the overall operation of the apparatus 100 for predicting a 3D pose. That is, the controller 140 may control other components included in the apparatus 100 for predicting a 3D pose to perform an operation of predicting a 3D pose.

For example, the controller 140 may execute a program stored in the memory 120, may read a file stored in the memory 120, or may store a new file in the memory 120.

A process in which the controller 140 performs a method of predicting a 3D pose according to an embodiment by executing a program stored in the memory 120 will be described in detail below.

The controller 140 may generate the plurality of image data as limb heatmaps and joint heatmaps by using a heatmap estimator.

For example, the controller 140 uses a pre-trained heatmap estimator 210 for receiving a stereo RGB image $I ∈ {ℝ}^{2 \times 256 \times 256 \times 3}$ as input and generating *N_{J}* joint heatmaps ${H}_{J} ∈ {ℝ}^{2 {N}_{J} \times 64 \times 64}$ and *N_{L}* limb heatmaps ${H}_{J} ∈ {ℝ}^{2 {N}_{J} \times 64 \times 64}$.

Meanwhile, FIG. 2 is a schematic diagram of an apparatus 100 for predicting a 3D pose, which includes a grid heatmap encoder 220 and a propagation network 230. In this case, the grid heatmap encoder 220 receives joint heatmaps as input and generates a feature embedding for each joint. Furthermore, the propagation network 230 may accurately predict a 3D pose by recognizing a skeletal structure and processing the generated embeddings. In this case, in the description of the present embodiment, the embedding means converting raw data into a vector. For example, generating a feature embedding may mean generating a feature vector. A joint feature vector for each joint is propagated through a skeletal tree hierarchical structure, in which case the skeletal tree hierarchical structure may be represented by a tree structure with a root representing the head. In FIG. 2, a simplified skeleton showing propagation from the head to the hands is indicated by "T." Meanwhile, feature propagation utilizes propagation units (PUs) 250.

Referring to FIG. 2, the controller 140 may receive a plurality of pieces of image data 10 or 20 obtained by observing a user's various body parts from a first-person viewpoint as input, and may generate the data as limb heatmaps and joint heatmaps by using the heatmap estimator 210.

In this case, the heatmap estimator 210 may be trained using scripts for previously input data sets. The basic configuration of the heatmap estimator 210 uses a known optimizer (see the paper by Diederik Kingma and Jimmy Ba (2015). Adam: A method for stochastic optimization. In International Conference on Learning Representations (ICLR), San Diego, CA, USA). The heatmap estimator 210 is a known technology, so that a detailed description thereof will be omitted.

The controller 140 may extract a joint feature vector by inputting joint heatmaps to the grid heatmap encoder 220.

More specifically, the controller 140 may extract a joint feature vector by concatenating joint heatmaps into a grid form and thus combining them into a single image, dividing the combined image into patches, which are joint heatmaps for each joint, and encoding the patches.

In other words, all joint heatmaps may be combined into one large single grid image, and a grid combined in the image may be divided into patches.

For example, a joint heatmap having a size of 64 × 64 may be stored in a single image having a resolution of 384 × 384. The image is a 6 × 6 grid, and may be composed of 36 regions. The joint heatmap may fill the grid in sequence. Meanwhile, regions that do not correspond to the joint heatmap are masked in the transformer encoder and do not affect output.

Referring to FIG. 2, the controller 140 may generate an input embedding by linearly projecting a grid divided into patches, i.e., joint heatmaps, and may input it to the transformer encoder. In this case, the transformer encoder may include multi-head attention. In this case, the transformer encoder according to an embodiment may be constructed by removing a special classification (CLS) token from the structure of a known encoder (see the paper by Alexey Dosovitskiy, Lucas Beyer, Alexander Kolesnikov, Dirk Weissenborn, Xiaohua Zhai, Thomas Unterthiner, Mostafa Dehghani, Matthias Minderer, Georg Heigold, Sylvain Gelly, Jakob Uszkoreit, and Neil Houlsby (2021). An image is worth 16x16 words: Transformers for image recognition at scale. ICLR).

According to an embodiment, the transformer encoder may take an input embedding z and output an output feature embedding z'.

The transformer encoder uses an embedding having a size of 1024 for each of *32N_{J}* patches and *z* = [*z*₁, *z*₂, ... , *z*_{32*N*_{J}}]. In this case, layer normalization (Norm) may perform normalization on the feature embedding. Meanwhile, the multi-head attention layer includes 8 heads. The size of the middle layer of an MLP (Multi-Layer Perceptron) is 4096. Furthermore, the grid heatmap encoder 220 may use three transformer encoder layers. An embedding vector having a size of 16384 among 16 patches for individual joint heatmaps is output. Thereafter, the embedding vector is compressed into an MLP denoted by *E*ₖ. In this case, the MLP has ReLU (see the paper by Abien Fred Agarap (2018). Deep learning using rectified linear units (relu). cite arxiv: 1803.08375 Comment: 7 pages, 11 figures, 9 tables) nonlinearity for the middle layer. The hidden sizes of the first two layers of the MLP are 2048 and 512, and the last layer outputs a final embedding having a size of 128.

According to an embodiment, patch-wise communication with self-attention is performed to maintain the consistency between the joint heatmap and the feature embedding, so that an encoding process preserves the correspondence between the input feature embedding of the patches and output. That is, the joint feature vector of the joint heatmaps is generated by concatenating output feature embeddings corresponding to individual input patches and performing re-encoding.

In this manner, unlike a CNN encoder in which communication occurs within close pixels of different heatmaps, the grid heatmap encoder 220 according to an embodiment enables communication between spatially distant heatmap patches. Accordingly, the grid heatmap encoder 220 may share features without down-sampling, thereby minimizing information loss.

Meanwhile, the processing process of the grid heatmap encoder 220 may be formulated as follows.

In this case, it is assumed that $\left\{{H}_{J , i}∈{ℝ}^{64 \times 64}\left|i=1,2,…,2{N}_{J}\right.\right\}$ is a set of 2 × *N_{J}* joint heatmaps.

The joint heatmaps are arranged as a single grid image. The arranged image is then divided into a total of 4 × 4 × 2*N_{J}* patches $\left\{{H}_{J , i}∈{ℝ}^{64 \times 64}\left|i=1,2,…,2{N}_{J}\right.\right\}$, in which case 16 patches correspond to joint heatmaps. For simplicity, *X*_{16(*i*-1)+1} to *X*_{16*i*} correspond to an *i* - th joint heatmap.

Thereafter, each patch *Xᵢ* is projected into input embedding space ${ℝ}^{1024}$ using a learnable projection matrix ${W}_{z} ∈ {ℝ}^{1024 \times 256}$. Furthermore, a learnable positional encoding ${P}_{i} ∈ {ℝ}^{1024}$ is added to generate an input embedding *zᵢ* that is input to the transformer encoder. In this case, the projected embedding using the positional encoding for each patch may be represented by Equation 1 below: ${z}_{i} = {W}_{z} ⋅ Flatten \left({X}_{i}\right) + {p}_{i}$

In this case, *W* denotes a learnable projection matrix, and may be a matrix in which non-linear portions are removed from general layers in a deep learning network. According to an embodiment, patches may be encoded into a feature vector having a desired size through the above-described matrix. *X* denotes pixels generated when the joint heatmap is divided into patches, and may have a size of 4 × 4. p denotes learnable positional encoding. In the transformer encoder structure according to an embodiment, position information is not received as input but only the value of a patch itself is received, so that a position encoding value can be added such that the position information can be found. *z* = [*z*₁, *z*₂, *... , z_{32N_{J}}*] may be encoded by three transformer encoder layers together with multi-head attention for output $z ′ = \left[{z}_{1}^{′},{z}_{2}^{′},…,{z}_{32 {N}_{J}}^{′}\right]$. In the case of a *j* - th joint heatmap, the corresponding output embeddings of 16 patches may be concatenated into 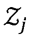 and then re-encoded into smaller dimensional feature embeddings *kⱼ* through multiple fully connected layers denoted by *E_{K}.* This process may be formulated by Equations 2 to 4 below: $z ′ = TransformerEncoder \left(z\right)$ ${Z}_{j} = \left[{z}_{16 \left(j-1\right) + 1}^{′},{z}_{16 \left(j-1\right) + 2}^{′},…,{z}_{16 j}^{′}\right]$ ${k}_{j} = {E}_{K} \left({Z}_{j}\right)$

A joint feature vector ${F}_{J , i} ∈ {ℝ}^{256}$ corresponding to a specific joint may be obtained by concatenating stereo heatmap features.

Assuming that (2*i* - 1) - th and 2*i* - th heatmaps correspond to an *i* - th joint, joint heatmaps may be formulated by Equation 5 below: ${F}_{J , i} = \left[{k}_{2 i - 1}, {k}_{2 i}\right] , for 1 \leq i \leq {N}_{J}$

The controller 140 may output a propagation feature vector by propagating a relational feature vector between neighboring joints, generated based on the joint feature vector and the limb heatmaps, through the propagation network having a skeletal tree hierarchical structure.

In this case, the propagation network may include: a relational feature encoder configured to extract a relational feature vector between neighboring joints by using limb heatmaps; and two-layer propagation units including a long short-term memory (LSTM) structure configured to handle a propagation process for a joint feature vector and the relational feature vector.

Referring to FIG. 2, the propagation network 230 may include a relational feature encoder 240 and propagation units 250.

The relational feature encoder 240 may output a relational feature vector between joints by using estimated limb heatmaps. In this case, the estimated limb heatmaps may be flattened and generated as a vector having specific dimensions for the purpose of input to the MLP layer. Furthermore, the propagation units 250 may handle a propagation process that generates the states of a lower joint (a child joint) by using the upper states (parent states), relational feature and joint feature of the lower joint (the child joint) as input. In this time, the states of the joint are propagated from the head, to which the camera is directly connected, to the limbs through a skeletal tree hierarchical structure. In the propagation process, whether the upper joint (parent joint) information is reflected therein may be flexibly determined depending on the certainty of the upper joint (parent joint) and lower joint (child joint) features by the propagation units.

According to an embodiment, the limb heatmaps may include 3D information including a camera view angle trigonometric function. Accordingly, the limb heatmaps may be utilized to provide information about the connection between the upper joint (the parent joint) and the lower joint (the child joint).

Meanwhile, the relational feature encoder *E_{R}* composed of fully connected layers encodes limb heatmaps H_{L,i} ∈ *R*^{2×64×64} into limb features. In this case, the limb features are concatenated to form a relational feature vector F_{R}. Assuming that H_{L,2i-1} and H_{L,2i} correspond to limb heatmaps connecting an *i* - th joint and its upper joint (its parent joint), the process of providing information about the connection between an upper joint (a parent joint) and a lower joint (a child joint), i.e., the process of generating a relational feature vector, may be formulated by Equation 6 below: ${F}_{R , i} = \left[{E}_{L}\left({H}_{L , 2 i - 1}\right),{E}_{L}\left({H}_{L , 2 i}\right)\right] , for 1 \leq i \leq {N}_{L}$

In this case, *E_{L}* may be a relational feature encoder, and may convert one limb heatmap into a one-dimensional vector, receive the vector, and output an encoding result vector to an MLP. In this case, the MLP may have a structure in which other layers are stacked on top of each other, and thus the result of each layer is connected to the input of its upper layer. The MLP allows multiple layers to be stacked on top of each other in succession.

Meanwhile, referring to FIGS. 2 and 3, the propagation units 250 according to an embodiment may include two layers.

The propagation units 250 according to an embodiment may provide a weight to a relational feature between a parent's hidden state and a joint feature.

According to an embodiment, in the skeletal tree hierarchical structure, *parent*(*i*) denotes the index of the upper joint (the parent joint), and *PropagationNet*((*H,C*),*R,J*) denotes the propagation network. In this case, the propagation network takes hidden and cell states for two propagation unit (PU) layers *H =* [*h*₁, *h*₂] and *C =* [*c*₁, *c*₂]*,* the relationship feature *R* and the joint feature *J,* and *i* - th joint heatmaps H*ᵢ* and C*ᵢ* may be formulated by Equations 7 to 9 below: ${S}_{i} = \left({H}_{i}, {C}_{i}\right)$ ${H}_{0} = \vec{0} , {C}_{0} = \vec{0}$ ${S}_{i} = PropagationNet \left({S}_{parent \left(i\right)}, {F}_{J , i}, {F}_{R , i}\right) , for 1 \leq i \leq {N}_{J}$

Meanwhile, as shown in FIG. 2, the head, which is the root representing the top joint, is not visible from an egocentric viewpoint, i.e., a first-person viewpoint, and thus has no feature, so that it is indexed 0 and is initialized to a zero vector (Zero Init). An *i* - th propagated feature F_{P, i} ∈ *R*²⁵⁶ is a hidden state from the second layer of the propagation network h_{2,*i*}.

According to an embodiment, the propagation network may estimate the position of the lower joint (the child joint) using the position of the upper joint (the parent joint) and the relationship between the joints.

Meanwhile, the propagation units may further include a forget gate (not shown) configured to ignore the joint feature of the upper joint and the relational feature, which are propagated, based on the joint feature of the lower joint, in addition to the LSTM structure.

According to an embodiment, the forget gate ignores the joint feature of the upper joint (the parent joint) and the relational feature when the feature of the lower joint (the child joint) are apparent. Accordingly, when the forget gate is included, there may be performed the role of predicting a pose only for an ambiguous joint, i.e., a lower joint hidden by an upper joint.

The propagation units may be formulated by Equations 10 to 13 below: ${f}_{i}^{′} = σ \left({W}_{f ′}⋅{F}_{J , i}+{b}_{f ′}\right)$ ${f}_{i}^{"} = σ \left({W}_{f "}⋅{F}_{J , i}+{b}_{f "}\right)$ ${h}_{i}^{′} = {f}_{i}^{′} ⊙ {h}_{parent \left(i\right)}$ ${r}_{i}^{′} = {f}_{i}^{"} ⊙ {F}_{R , i}$

In this case, *W* may be a weight matrix, and *b* may be a bias vector. Furthermore, the symbol "⊙" denotes element-wise multiplication, and the symbol "+" denotes element-wise addition. Moreover, the symbol "σ" denotes sigmoid activation.

The forget gate may be computed from the joint feature, and may be denoted as ${f}_{i}^{′}$ and ${f}_{i}^{"}$. The forget gate may generate the modified hidden state ${h}_{i}^{′}$ and the modified relational feature ${r}_{i}^{′}$ by controlling both the hidden state of the upper joint (the parent joint) and the relational feature between two joints. Thereafter, the modified state and the joint feature processed as input are used in a standard LSTM structure, are weighted, and then apply non-linearity to four gates (input, candidate cell state, forget, and output gates).

According to an embodiment, in the case of the second layer of the propagation network, only the hidden state of the previous layer is present without the distinction between relational and joint features. Accordingly, the hidden state of the previous layer may be used to forget the hidden state of the upper joint (the parent joint) in the current layer.

The controller 140 may predict a 3D pose of a user based on the propagation feature vector and the joint feature vector.

As shown in FIG. 2, according to an embodiment, the pose may be predicted by estimating the 3D position of each joint in such a manner as to concatenate the output F_{P, i} of the propagation network and the joint feature F_{J, i}, which is the output of the transformer encoder for each joint, and projecting them.

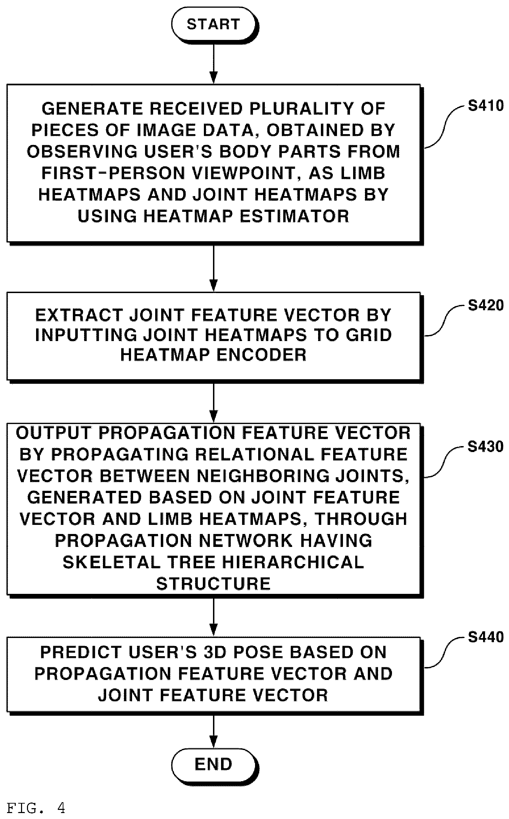

FIG. 4 is a flowchart based on an example of a method of predicting a 3D pose according to an embodiment.

The method of predicting a 3D pose according to the embodiment shown in FIG. 4 includes steps that are processed in a time-series manner in the apparatus for predicting a 3D pose shown in FIGS. 1 to 3. Accordingly, the descriptions that are omitted below but have been given above in conjunction with the apparatus for predicting a 3D pose shown in FIGS. 1 to 3 may also be applied to the method of predicting a 3D pose according to the embodiment shown in FIG. 4.

Referring to FIG. 4, the apparatus 100 for predicting a 3D pose may receive a plurality of pieces of image data obtained by observing a user's body parts from a first-person viewpoint and then generate the received plurality of pieces of image data as limb heatmaps and joint heatmaps by using a heatmap estimator in step S410.

In step S420, the apparatus 100 for predicting a 3D pose may extract a joint feature vector by inputting joint heatmaps to a grid heatmap encoder. In this case, the apparatus 100 for predicting a 3D pose may extract a joint feature vector by concatenating the joint heatmaps in a grid form and thus combining them into a single image, dividing the combined image into patches, which are joint heatmaps for each joint, and encoding the patches.

In step S430, the apparatus 100 for predicting a 3D pose may output a propagation feature vector by propagating the joint feature vector and a relational feature vector between neighboring joints, generated based on the limb heatmaps, through a propagation network having a skeletal tree hierarchical structure. In this case, the propagation network may include: a relational feature encoder configured to extract a relational feature vector between neighboring joints by using limb heatmaps; and two-layer propagation units including a long short-term memory (LSTM) structure configured to handle a propagation process for the joint feature vector and the relational feature vector. Furthermore, the propagation units may further include a forget gate configured to be able to ignore the joint feature of the upper joint and a relational feature, which are propagated, based on the joint feature of the lower joint, in addition to the LSTM structure.

In step S440, the apparatus 100 for predicting a 3D pose may predict a 3D pose of a user based on the propagation feature vectors and the joint feature vectors.

The term "unit" used in the above-described embodiments means software or a hardware component such as a field-programmable gate array (FPGA) or application-specific integrated circuit (ASIC), and a "unit" performs a specific role. However, a "unit" is not limited to software or hardware. A "unit" may be configured to be present in an addressable storage medium, and also may be configured to run one or more processors. Accordingly, as an example, a "unit" includes components, such as software components, object-oriented software components, class components and task components, processes, functions, attributes, procedures, subroutines, segments in program code, drivers, firmware, microcode, circuits, data, a database, data structures, tables, arrays, and variables.

The functions provided in components and "unit(s)" may be combined into a smaller number of components and "unit(s)" or divided into a larger number of components and "unit(s)."

In addition, components and "unit(s)" may be implemented to run one or more central processing units (CPUs) in a device or secure multimedia card.

The method of predicting a 3D pose according to the embodiment described through the present specification may be implemented in the form of a computer-readable medium that stores instructions and data that can be executed by a computer. In this case, the instructions and the data may be stored in the form of program code, and may generate a predetermined program module and perform a predetermined operation when executed by a processor. Furthermore, the computer-readable medium may be any type of available medium that can be accessed by a computer, and may include volatile, non-volatile, separable and non-separable media. Furthermore, the computer-readable medium may be a computer storage medium. The computer storage medium may include all volatile, non-volatile, separable and non-separable media that store information, such as computer-readable instructions, a data structure, a program module, or other data, and that are implemented using any method or technology. For example, the computer storage medium may be a magnetic storage medium such as an HDD, an SSD, or the like, an optical storage medium such as a CD, a DVD, a Blu-ray disk or the like, or memory included in a server that can be accessed over a network.

Furthermore, the method of predicting a 3D pose according to the embodiment described through the present specification may be implemented as a computer program (or a computer program product) including computer-executable instructions. The computer program includes programmable machine instructions that are processed by a processor, and may be implemented as a high-level programming language, an object-oriented programming language, an assembly language, a machine language, or the like. Furthermore, the computer program may be stored in a tangible computer-readable storage medium (for example, memory, a hard disk, a magnetic/optical medium, a solid-state drive (SSD), or the like).

Accordingly, the method of predicting a 3D pose according to the embodiment described through the present specification may be implemented in such a manner that the above-described computer program is executed by a computing apparatus. The computing apparatus may include at least some of a processor, memory, a storage device, a high-speed interface connected to memory and a high-speed expansion port, and a low-speed interface connected to a low-speed bus and a storage device. These individual components are connected using various buses, and may be mounted on a common motherboard or using another appropriate method.

In this case, the processor may process instructions within a computing apparatus. An example of the instructions is instructions which are stored in memory or a storage device in order to display graphic information for providing a Graphic User Interface (GUI) onto an external input/output device, such as a display connected to a high-speed interface. As another embodiment, a plurality of processors and/or a plurality of buses may be appropriately used along with a plurality of pieces of memory. Furthermore, the processor may be implemented as a chipset composed of chips including a plurality of independent analog and/or digital processors.

Furthermore, the memory stores information within the computing device. As an example, the memory may include a volatile memory unit or a set of the volatile memory units. As another example, the memory may include a non-volatile memory unit or a set of the non-volatile memory units. Furthermore, the memory may be another type of computer-readable medium, such as a magnetic or optical disk.

In addition, the storage device may provide a large storage space to the computing device. The storage device may be a computer-readable medium, or may be a configuration including such a computer-readable medium. For example, the storage device may also include devices within a storage area network (SAN) or other elements, and may be a floppy disk device, a hard disk device, an optical disk device, a tape device, flash memory, or a similar semiconductor memory device or array.

The above-described embodiments are intended for illustrative purposes. For example, each component described as being in a single form may be practiced in a distributed form. In the same manner, components described as being in a distributed form may be practiced in an integrated form.

The scope of protection pursued through the present specification should be defined by the attached claims, rather than the detailed description

## Claims

1. An apparatus (100) for predicting a three-dimensional, 3D, pose, the apparatus (100) comprising:
an input/output interface (110) configured to receive a plurality of pieces of image data obtained by observing a user's body parts from a first-person viewpoint and output results of computation processing of the image data;
memory (120) configured to store a program for performing a method of predicting a 3D pose; and
a controller (140) configured to predict the user's 3D pose based on the image data received through the input/output interface by executing the program;
wherein the controller (140):
generates the plurality of pieces of image data as limb heatmaps and joint heatmaps by using a heatmap estimator (210);
extracts a joint feature vector by inputting the joint heatmaps to a grid heatmap encoder (220);
outputs a propagation feature vector by propagating a relational feature vector between neighboring joints, generated based on the joint feature vector and the limb heatmaps, through a propagation network (230) having a skeletal tree hierarchical structure; and
predicts the user's 3D pose based on the propagation feature vector and the joint feature vector,
wherein the controller (140) extracts the joint feature vector by concatenating the joint heatmaps in a grid form and thus combining them into a single image, dividing the combined image into patches, which are joint heatmaps for each joint, and encoding the patches.

2. The apparatus (100) of claim 1, wherein the propagation network (230) comprises:
a relational feature encoder (240) configured to extract a relational feature vector between neighboring joints by using limb heatmaps; and
two-layer propagation units (250) including a long short-term memory, LSTM, structure configured to handle a propagation process for the joint feature vector and the relational feature vector.

3. The apparatus (100) of claim 2, wherein the propagation units (250) further include a forget gate configured to ignore a joint feature of an upper joint and a relational feature, which are propagated, based on a joint feature of a lower joint, in addition to the LSTM structure.

4. A computer-implemented method of predicting a three-dimensional, 3D, pose, the method being performed by an apparatus (100) for predicting a 3D pose, the method comprising:
receiving a plurality of pieces of image data obtained by observing a user's body parts from a first-person viewpoint;
generating (S410) the plurality of pieces of image data as limb heatmaps and joint heatmaps by using a heatmap estimator (210);
extracting (S420) a joint feature vector by inputting the joint heatmaps to a grid heatmap encoder (220);
outputting (S430) a propagation feature vector by propagating a relational feature vector between neighboring joints, generated based on the joint feature vector and the limb heatmaps, through a propagation network having a skeletal tree hierarchical structure; and
predicting (S440) the user's 3D pose based on the propagation feature vector and the joint feature vector,
wherein extracting the joint feature vector comprises:
combining the joint heatmaps into a single image by concatenating them in a grid form; and
extracting the joint feature vector by dividing the combined image into patches, which are joint heatmaps for each joint, and encoding the patches.

5. The method of claim 4, wherein the propagation network (230) comprises:
a relational feature encoder (240) configured to extract a relational feature vector between neighboring joints by using limb heatmaps; and
two-layer propagation units (250) including a long short-term memory, LSTM, structure configured to handle a propagation process for the joint feature vector and the relational feature vector.

6. The method of claim 5, wherein the propagation units (250) further include a forget gate configured to ignore a joint feature of an upper joint and a relational feature, which are propagated, based on a joint feature of a lower joint, in addition to the LSTM structure.

7. A non-transitory computer-readable storage medium having stored thereon a program that, when executed by one or more of processor, causes the one or more of processor to execute the method set forth in claim 4.

8. A computer program that is executed by an apparatus for predicting a three-dimensional, 3D, pose and stored in a non-transitory computer-readable storage medium to perform the method set forth in claim 4 when executed by the apparatus.

## Patentansprüche

1. Vorrichtung (100) zum Vorhersagen einer dreidimensionalen (3D) Körperhaltung, wobei die Vorrichtung (100) umfasst:
eine Eingabe/Ausgabe-Schnittstelle (110), die dazu eingerichtet ist, mehrere Bilddaten zu empfangen, die durch Beobachten von Körperteilen eines Benutzers aus einer Egoperspektive erhalten werden, und Ergebnisse einer Rechenverarbeitung der Bilddaten auszugeben;
einen Speicher (120), der dazu eingerichtet ist, ein Programm zum Durchführen eines Verfahrens zum Vorhersagen einer 3D-Körperhaltung zu speichern; und
eine Steuerung (140), die dazu eingerichtet ist, die 3D-Körperhaltung des Benutzers auf der Grundlage der über die Eingabe/Ausgabe-Schnittstelle empfangenen Bilddaten durch Ausführen des Programms vorherzusagen;
wobei die Steuerung (140):
die mehreren Bilddaten als Gliedmaßen-Heatmaps und Gelenk-Heatmaps unter Verwendung einer Heatmap-Schätzvorrichtung (210) generiert;
einen Gelenkmerkmalsvektor durch Eingeben der Gelenk-Heatmaps in einen Gitter-Heatmap-Codierer (220) extrahiert;
einen Ausbreitungsmerkmalsvektor durch Ausbreiten eines relationalen Merkmalsvektors zwischen benachbarten Gelenken, der auf der Grundlage des Gelenkmerkmalsvektors und der Gliedmaßen-Heatmaps generiert ist, durch ein Ausbreitungsnetzwerk (230), das eine Skelettbaumhierarchiestruktur aufweist, ausgibt; und
die 3D-Körperhaltung des Benutzers auf der Grundlage des Ausbreitungsmerkmalsvektors und des Gelenkmerkmalsvektors vorhersagt,
wobei die Steuerung (140) den Gelenkmerkmalsvektor extrahiert, indem sie die Gelenk-Heatmaps in einer Gitterform verkettet und sie so zu einem einzigen Bild kombiniert, das kombinierte Bild in Bildausschnittes aufteilt, die Gelenk-Heatmaps für jedes Gelenk sind, und die Bildausschnittes codiert.

2. Vorrichtung (100) nach Anspruch 1, wobei das Ausbreitungsnetzwerk (230) umfasst:
einen relationalen Merkmalscodierer (240), der dazu eingerichtet ist, einen relationalen Merkmalsvektor zwischen benachbarten Gelenken unter Verwendung von Gliedmaßen-Heatmaps zu extrahieren; und
Zweischicht-Ausbreitungseinheiten (250), die eine Long Short-Term Memory(LSTM-)Struktur aufweisen und dazu eingerichtet sind, einen Ausbreitungsprozess für den Gelenkmerkmalsvektor und den relationalen Merkmalsvektor zu verarbeiten.

3. Vorrichtung (100) nach Anspruch 2, wobei die Ausbreitungseinheiten (250) des Weiteren ein Forget-Gate aufweisen, das dazu eingerichtet ist, ein Gelenkmerkmal eines oberen Gelenks und ein relationales Merkmal, die ausgebreitet werden, auf der Grundlage eines Gelenkmerkmals eines unteren Gelenks zu ignorieren, zusätzlich zu der LSTM-Struktur.

4. Computerimplementiertes Verfahren zum Vorhersagen einer dreidimensionalen (3D) Körperhaltung, wobei das Verfahren durch eine Vorrichtung (100) zum Vorhersagen einer 3D-Körperhaltung durchgeführt wird, wobei das Verfahren umfasst:
Empfangen mehrerer Bilddaten, die durch Beobachten von Körperteilen eines Benutzers aus einer Egoperspektive erhalten werden;
Generieren (S410) der mehreren Bilddaten als Gliedmaßen-Heatmaps und Gelenk-Heatmaps unter Verwendung einer Heatmap-Schätzvorrichtung (210);
Extrahieren (S420) eines Gelenkmerkmalsvektors durch Eingeben der Gelenk-Heatmaps in einen Gitter-Heatmap-Codierer (220);
Ausgeben (S430) eines Ausbreitungsmerkmalsvektors durch Ausbreiten eines relationalen Merkmalsvektors zwischen benachbarten Gelenken, der auf der Grundlage des Gelenkmerkmalsvektors und der Gliedmaßen-Heatmaps generiert wird, durch ein Ausbreitungsnetzwerk, das eine Skelettbaumhierarchiestruktur aufweist; und
Vorhersagen (S440) der 3D-Körperhaltung des Benutzers auf der Grundlage des Ausbreitungsmerkmalsvektors und des Gelenkmerkmalsvektors,
wobei das Extrahieren des Gelenkmerkmalsvektors umfasst:
Kombinieren der Gelenk-Heatmaps zu einem einzigen Bild durch ihr Verketten in einer Gitterform; und
Extrahieren des Gelenkmerkmalsvektors durch Aufteilen des kombinierten Bildes in Bildausschnitte, die Gelenk-Heatmaps für jedes Gelenk sind, und Codieren der Bildausschnitte.

5. Verfahren nach Anspruch 4, wobei das Ausbreitungsnetzwerk (230) umfasst:
einen relationalen Merkmalscodierer (240), der dazu eingerichtet ist, einen relationalen Merkmalsvektor zwischen benachbarten Gelenken unter Verwendung von Gliedmaßen-Heatmaps zu extrahieren; und
Zweischicht-Ausbreitungseinheiten (250), die eine Long Short-Term Memory(LSTM-)Struktur) aufweisen und dazu eingerichtet sind, einen Ausbreitungsprozess für den Gelenkmerkmalsvektor und den relationalen Merkmalsvektor zu verarbeiten.

6. Verfahren nach Anspruch 5, wobei die Ausbreitungseinheiten (250) des Weiteren ein Forget-Gate aufweisen, das dazu eingerichtet ist, ein Gelenkmerkmal eines oberen Gelenks und ein relationales Merkmal, die ausgebreitet werden, auf der Grundlage eines Gelenkmerkmals eines unteren Gelenks zu ignorieren, zusätzlich zu der LSTM-Struktur.

7. Nicht-transitorisches, computerlesbares Speichermedium, auf dem ein Programm gespeichert ist, das, wenn es durch einen oder mehrere Prozessoren ausgeführt wird, den einen oder die mehreren Prozessoren anweist, das Verfahren nach Anspruch 4 ausführen.

8. Computerprogramm, ausgeführt durch eine Vorrichtung zum Vorhersagen einer dreidimensionalen (3D) Körperhaltung und gespeichert auf einem nicht-transitorischen, computerlesbaren Speichermedium, um das Verfahren nach Anspruch 4 durchzuführen, wenn es durch die Vorrichtung ausgeführt wird.

## Revendications

1. Appareil (100) destiné à prédire une posture tridimensionnelle, 3D, l'appareil (100) comprenant :
une interface d'entrée/sortie (110) configurée pour recevoir une pluralité de données d'image obtenues en observant des parties du corps d'un utilisateur depuis un point de vue à la première personne et pour fournir en sortie les résultats du traitement de calcul de ces données d'image ;
une mémoire (120) configurée pour stocker un programme permettant de mettre en œuvre un procédé de prédiction d'une posture 3D ; et
un dispositif de commande (140) configuré pour prédire la posture 3D de l'utilisateur sur la base des données d'image reçues via l'interface d'entrée/sortie en exécutant le programme ;
dans lequel le dispositif de commande (140) :
génère la pluralité de données d'image sous la forme de cartes thermiques de membres et de cartes thermiques d'articulations en utilisant un estimateur de carte thermique (210) ;
extrait un vecteur de caractéristiques d'articulations en entrant les cartes thermiques d'articulations dans un codeur de carte thermique en grille (220) ;
fournit en sortie un vecteur de caractéristiques de propagation en propageant un vecteur de caractéristiques relationnelles entre des articulations voisines, généré sur la base du vecteur de caractéristiques d'articulations et des cartes thermiques de membres, via un réseau de propagation (230) ayant une structure hiérarchique en arbre squelettique ; et
prédit la posture 3D de l'utilisateur sur la base du vecteur de caractéristiques de propagation et du vecteur de caractéristiques d'articulations,
dans lequel le dispositif de commande (140) extrait le vecteur de caractéristiques d'articulations en concaténant les cartes thermiques d'articulations sous forme de grille et en les combinant ainsi en une seule image, en divisant l'image combinée en patches, qui sont des cartes thermiques d'articulations pour chaque articulation, et en codant les patches.

2. Appareil (100) selon la revendication 1, dans lequel le réseau de propagation (230) comprend :
un codeur de caractéristiques relationnelles (240) configuré pour extraire un vecteur de caractéristiques relationnelles entre des articulations voisines en utilisant des cartes thermiques de membres ; et
des unités de propagation à deux couches (250) comportant une structure de mémoire à court terme longue (LSTM) configurée pour gérer un processus de propagation pour le vecteur de caractéristiques d'articulations et le vecteur de caractéristiques relationnelles.

3. Appareil (100) selon la revendication 2, dans lequel les unités de propagation (250) comportent en outre une porte d'oubli configurée pour ignorer une caractéristique d'articulation d'une articulation supérieure et une caractéristique relationnelle, qui sont propagées, sur la base d'une caractéristique d'articulation d'une articulation inférieure, en plus de la structure LSTM.

4. Procédé mis en œuvre par ordinateur pour prédire une posture tridimensionnelle, 3D, le procédé étant exécuté par un appareil (100) destiné à prédire une posture 3D, le procédé consistant à :
recevoir une pluralité de données d'image obtenues en observant des parties du corps d'un utilisateur depuis un point de vue à la première personne ;
générer (S410) la pluralité de données d'image sous la forme de cartes thermiques de membres et de cartes thermiques d'articulations en utilisant un estimateur de carte thermique (210) ;
extraire (S420) un vecteur de caractéristiques d'articulations en entrant les cartes thermiques d'articulations dans un codeur de carte thermique en grille (220) ;
fournir en sortie (S430) un vecteur de caractéristiques de propagation en propageant un vecteur de caractéristiques relationnelles entre des articulations voisines, généré sur la base du vecteur de caractéristiques d'articulations et des cartes thermiques de membres, via un réseau de propagation ayant une structure hiérarchique en arbre squelettique ; et
prédire (S440) la posture 3D de l'utilisateur sur la base du vecteur de caractéristiques de propagation et du vecteur de caractéristiques d'articulations,
dans lequel extraire le vecteur de caractéristiques d'articulations consiste à :
combiner les cartes thermiques d'articulations en une seule image en les concaténant sous forme de grille ; et
extraire le vecteur de caractéristiques d'articulations en divisant l'image combinée en patches, qui sont des cartes thermiques d'articulations pour chaque articulation, et coder les patches.

5. Procédé selon la revendication 4, dans lequel le réseau de propagation (230) comprend :
un codeur de caractéristiques relationnelles (240) configuré pour extraire un vecteur de caractéristiques relationnelles entre des articulations voisines en utilisant des cartes thermiques de membres ; et
des unités de propagation à deux couches (250) comportant une structure de mémoire à court terme longue, LSTM, configurée pour gérer un processus de propagation pour le vecteur de caractéristiques d'articulations et le vecteur de caractéristiques relationnelles.

6. Procédé selon la revendication 5, dans lequel les unités de propagation (250) incluent en outre une porte d'oubli configurée pour ignorer une caractéristique d'articulation d'une articulation supérieure et une caractéristique relationnelle, qui sont propagées, sur la base d'une caractéristique d'articulation d'une articulation inférieure, en plus de la structure LSTM.

7. Support de stockage non transitoire lisible par ordinateur sur lequel est stocké un programme qui, lorsqu'il est exécuté par un ou plusieurs processeurs, amène lesdits un ou plusieurs processeurs à exécuter le procédé selon la revendication 4.

8. Programme informatique exécuté par un appareil destiné à prédire une posture tridimensionnelle, 3D, et stocké sur un support de stockage non transitoire lisible par ordinateur afin de mettre en œuvre le procédé selon la revendication 4 lorsqu'il est exécuté par l'appareil.
